(19) Europäisches Patentamt
European Patent Office
Office européen des brevets

(11) EP 2 776 224 B1

(12) **FASCICULE DE BREVET EUROPEEN**

(45) Date de publication et mention de la délivrance du brevet:
**21.08.2019 Bulletin 2019/34**

(21) Numéro de dépôt: **12794442.9**

(22) Date de dépôt: **06.11.2012**

(51) Int Cl.:
***B29B 13/10*** (2006.01) ***C08J 3/12*** (2006.01)

(86) Numéro de dépôt international:
**PCT/FR2012/052557**

(87) Numéro de publication internationale:
**WO 2013/068686 (16.05.2013 Gazette 2013/20)**

(54) **PROCEDE DE BROYAGE DE POLYARYL ETHER CETONES**

VERFAHREN ZUM SCHLEIFEN VON POLY(ARYLETHERKETONEN)

METHOD FOR GRINDING POLY(ARYL ETHER KETONES)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.11.2011 FR 1160258**

(43) Date de publication de la demande:
**17.09.2014 Bulletin 2014/38**

(73) Titulaire: **Arkema France**
**92700 Colombes (FR)**

(72) Inventeurs:
- **MATHIEU, Cyrille**
**F-76000 Rouen (FR)**
- **HURAUX, Karine**
**F-27520 Bourgtheroulde-Infreville (FR)**

(56) Documents cités:
**CA-A1- 2 086 780 US-A1- 2009 280 263**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 776 224 B1

Printed by Jouve, 75001 PARIS (FR)

## Description

La présente invention concerne un procédé de broyage amélioré des poly-arylène-éther-cétones, autorisant de très bons rendements et l'obtention de poudres de poly-arylène-éther-cétones de diamètre moyen inférieur à 100 $\mu$m présentant une distribution de taille resserrée.

Les poly-arylène-éther-cétones sont des matériaux très performants, notamment en termes de tenue thermique et leur application en revêtement de pièces techniques est souhaitée dans de nombreuses applications. Les procédés de revêtement avec ce type de polymère utilisent généralement le polymère sous forme de poudre.

Par ailleurs, les techniques de fabrication de pièces du type frittage laser utilisent également des poudres.

Il est donc recherché des procédés permettant l'obtention de poudres notamment dans des conditions économiquement viables.

Les procédés de broyages des polymères sont très nombreux. On peut en particulier citer les matériels utilisés, tels que les broyeurs à boulet, les broyeurs à impact utilisant différents types d'impacteur (marteaux, aiguilles, disques), les broyeurs à jet d'air, et les conditions de fonctionnement, typiquement cryogénique ou atmosphérique. Ces procédés conduisent à des rendements variables et des tailles de particules nécessitant parfois une sélection, par exemple par tamisage, de la poudre obtenue même si un sélecteur est souvent intégré au broyeur, permettant uniquement le passage des particules suffisamment broyées.

Par ailleurs, ces procédés conduisent à des poudres contenant une grande quantité de fines particules préjudiciables à certaines applications telles que le frittage laser.

Art antérieur :

Le broyage des poudres de poly-arylène-éther-cétones est largement décrit dans la littérature.
US 5247052 décrit un procédé de broyage de poly-arylène-éther-cétones à jet d'air opposé à lit fluidisé.
Ce procédé est opéré à des températures très froides et nécessite donc l'apport de frigories, ce qui présente un coût non négligeable.
US20050207931, décrit plusieurs procédés d'obtention de poudre parmi lesquels le broyage. Ici encore, le broyage s'effectue à basse température.
US20090280263 décrit un procédé d'obtention de poudre de poly-arylène-éther-cétones par broyage utilisant des poly-arylène-éther-cétones présentant une surface spécifique apparente mesurée par BET supérieure à 1 $m^2$/g.
Dans ce procédé le refoidissement du poly-arylène-éther-cétones à broyer est également préféré. Dans les exemples le refroidissement est opéré à l'aide d'azote liquide, c'est-à-dire des conditions pénalisant les coûts de fabrication.
Par ailleurs dans cette invention, il y a nécessité de tamiser la poudre après broyage, ce qui n'est pas le cas dans la présente invention.
Par ailleurs ces procédés conduisent à des quantités de fines importantes ce qui pose problème, notamment dans les applications de frittage laser.

La demanderesse a constaté, contre toute attente que les procédés de broyage de poly-arylène-éther-cétones pouvaient être opérés à température ambiante, typiquement supérieure à 0 °C avec des rendements proches de 100 % afin d'obtenir des poudres présentant une répartition de taille de particule (diamètres en volume) de d10>15$\mu$m, 50<d50<70$\mu$m, 120<d90<180$\mu$m, sans tamisage supplémentaire. Un d10>15$\mu$m est considéré comme nécessaire sur le plan des fines particules dans les applications telles que le frittage laser.

<u>Résumé de l'invention.</u>

La présente invention est selon le jeu de revendications. La présente invention concerne un procédé de broyage de poly-arylène-éther-cétones sous forme d'écailles ou de poudres grossières, présentant une porosité supérieure à 2$m^2$/g, mesurée avec un Coulter SA3100 de la société Beckman Coulter, mesure par adsorption d'azote à 105°C selon la méthode BET, et une masse volumique apparente inférieure à 0.4 kg/l, mesurée sur un voluménomètre de tassement STAV 2003 équipé d'une éprouvette de 250 ml après 2500 impulsions ; ledit procédé étant opéré dans une gamme de température se situant entre 0°C et50°C, afin d'obtenir des poudres présentant une répartition de tailles de particules (diamètres en volume) de d10>15$\mu$m, 50<d50<70$\mu$m, 120<d90<180$\mu$m.

Description détaillée.

Les poly-arylène-éther-cétones, également nommés PAEK (PolyArylEtherKetone en langue anglaise) utilisé dans l'invention comportent les motifs de formules suivantes:

$$(-Ar-X-) \text{ et } (-Ar_1-Y-)$$

dans lesquelles :

Ar et $Ar_1$ désignent chacun un radical aromatique divalent ;
Ar et $Ar_1$ peuvent être choisis, de préférence, parmi le 1,3-phénylène, 1,4-phénylène, le 4,4'-biphénylène, le 1,4-naphthylène, le 1,5-naphthylène et le 2,6-naphthylène ;
X désigne un groupe électro-attracteur ; il peut être choisi, de préférence, parmi le groupe carbonyle et le groupe sulfonyle,
Y désigne un groupe choisi parmi un atome d'oxygène, un atome de soufre, un groupe alkylène, tel que $-CH_2-$ et isopropylidène.

Dans ces motifs, au moins 50%, de préférence au moins 70% et plus particulièrement, au moins 80% des groupes X sont un groupe carbonyle, et au moins 50%, de préférence au moins 70% et plus particulièrement au moins 80% des groupes Y représentent un atome d'oxygène.
Selon un mode de réalisation préféré, 100% des groupes X désignent un groupe carbonyle et 100% des groupes Y représentent un atome d'oxygène.
Plus préférentiellement, le poly-arylène-éther-cétone (PAEK) peut être choisi parmi :

- un poly-éther-éther-cétone également nommé PEEK comprenant des motifs de formule I :

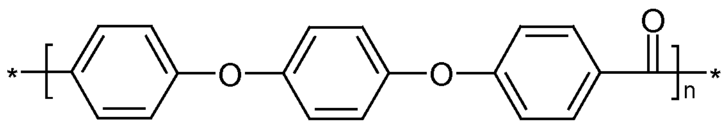

Formule I

- un poly-éther-cétone également nommé PEK, comprenant des motifs de formule II :

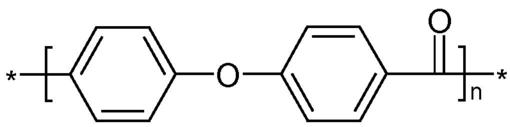

Formule II

- un poly-éther-cétone-cétone également nommé PEKK, comprenant des motifs de formules IIIA, de formule IIIB et leur mélange :

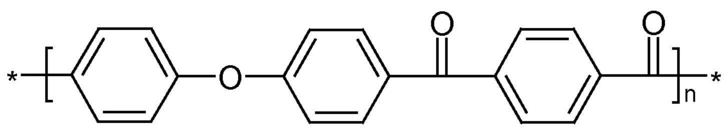

Formule IIIA

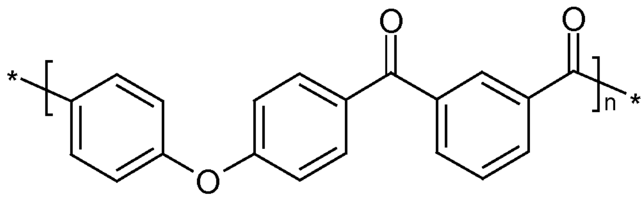

Formule IIIB

- et un poly-éther-éther-cétone-cétone également nommé PEEKK, comprenant des motifs de formules IV :

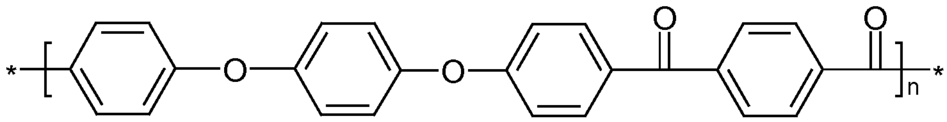

Formule IV

mais d'autres arrangements du groupe carbonyle et de l'atome d'oxygène sont également possibles.

Le poly-arylène-éther-cétone utilisable selon l'invention peut être cristallin, semi-cristallin ou amorphe.

De préférence, les poly-arylène-éther-cétone utilisés sont des poly-éther-cétone-cétone également nommé PEKK, comprenant des motifs de formules IIIA, de formule IIIB et leur mélange.

Les poly-arylène-éther-cétone utilisés dans le procédé de l'invention peut se présenter sous la forme de granulés poreux ou non, d'écailles de taille moyenne comprise entre 0.5 et 5 mm poreuses ou non, de poudres grossières, poreuses ou non.

Les poly-arylène-éther-cétone utilisés dans le procédé se présentent sous forme d'écailles ou poudres grossières et présentent une porosité supérieure à $2m^2/g$ mesurée avec un Coulter SA3100 de la société Beckman Coulter (mesure par adsorption d'azote à 105°C selon la méthode BET) et une masse volumique apparente inférieure à 0.4kg/l, et préférentiellement inférieure à 0.25kg/l (masse volumique des écailles tassées mesuré sur un voluménomètre de tassement STAV 2003 équipé d'une éprouvette de 250ml après 2500 impulsions.

Les broyeurs utilisés dans le procédé de l'invention peuvent être de tous types, mais de préférence, ce sont des broyeurs à impact, dont les impacteurs peuvent être des marteaux, des aiguilles, des disques. Selon une deuxième forme de l'invention les broyeurs utilisés sont du type jet d'air.

Dans un souci d'optimisation du procédé de broyage, une combinaison de différent type de broyeur peut être utilisée, par exemple, on broye d'abord avec un broyeur à impact, puis le produit est repris dans un broyeur jet d'air.

Dans tous les cas, la température de broyage se situe entre 0°C et 50°C, et préférentiellement entre 10 et 30 °C.

Avec le procédé de l'invention, il est possible d'obtenir directement, sans sélection ultérieure de la poudre sortie du broyeur des poudres présentant des distribution de taille de particules adaptée à une mise en oeuvre par frittage laser ou au revêtement d'articles ($d10 > 15\mu m$, $50 < d50 < 80\mu m$, $120 < d90 < 180\mu m$), avec un rendement approchant les 100 %.

Les poudres obtenues sont avantageusement utilisés dans les procédés de revêtements d'articles ou encore les procédés de frittage laser.

Les poudres peuvent être additivées de charges telles que l'alumine AL2O3 ou la silice telle que l'Aérosil pour en faciliter l'écoulement.

Exemple 1 :

Un polymère sous forme d'écailles de PEKK (OXPEKK SP), de viscosité 0.95dl/g (viscosité en solution à 25°C dans l'acide sulfurique à 96% selon la norme ISO 307) est micronisé dans un broyeur-sélecteur à impact Neuman ICM 7.6 à la température de 25 °C, la vitesse du broyeur est de 12000tr/min, la vitesse du sélecteur de 4500tr/min. Trois broyages successifs permettent d'obtenir la granulométrie suivante mesurée sur granulomètre Insitec T de Malvern équipé d'une focale de 300mm (mesure par diffraction laser sur poudre sèche, diamètres exprimés en volume Dv) : $Dv10 = 27\mu m$, $Dv50 = 76\mu m$, $Dv90 = 180\mu m$.

Le rendement est de 99%.

Exemple 2:

Un polymère sous forme d'écailles de PEKK (OXPEKK SP), de viscosité 0.85dl/g (viscosité en solution à 25°C dans l'acide sulfurique à 96% selon la norme ISO 307) est micronisé dans un broyeur-sélecteur à impact Neuman ICM 7.6 à la température de 25 °C, la vitesse du broyeur est de 12000tr/min, la vitesse du sélecteur de 4500tr/min. Deux broyages successifs permettent d'obtenir la granulométrie suivante mesurée sur granulomètre Insitec T de Malvern équipé d'une focale de 300mm (mesure par diffraction laser sur poudre sèche, diamètres exprimés en volume Dv) : Dv10 = 29μm, Dv50 = 81μm, Dv90 = 184μm.
Le rendement est de 98%.

Exemple 3 (comparatif):

Un polymère sous forme d'écailles de PEKK (OXPEKK SP), de viscosité 0.87dl/g (viscosité en solution à 25°C dans l'acide sulfurique à 96% selon la norme ISO 307) est micronisé dans un broyeur à marteaux Mikropull 2DH équipé d'une grille à trous ronds de 500μm à la température de - 40°C. Le broyage permet d'obtenir la granulométrie suivante mesurée sur granulomètre Insitec T de Malvern équipé d'une focale de 300mm (mesure par diffraction laser sur poudre sèche, diamètres exprimés en volume Dv) : Dv10 = 64μm, Dv50 = 155μm, Dv90 = 322μm.
Un tamisage à 145μm sur un tamiseur Finex 22 de la marque Russel permet d'atteindre la granulométrie suivante : Dv10 = 47μm, Dv50 = 95μm, Dv90 = 148μm avec un rendement de 48%.
On constate qu'à basse température le rendement est très inférieur à celui obtenu en broyant les écailles à 25 °C.

## Revendications

1. Procédé de broyage de poly-arylène-éther-cétones sous forme d'écailles ou de poudres grossières, présentant une porosité supérieure à 2m$^2$/g, mesurée avec un Coulter SA3100 de la société Beckman Coulter, mesure par adsorption d'azote à 105°C selon la méthode BET, et une masse volumique apparente tassée inférieure à 0.4 kg/l, mesurée sur un voluménomètre de tassement STAV 2003 équipé d'une éprouvette de 250 ml après 2500 impulsions ;
ledit procédé étant opéré dans une gamme de températures se situant entre 0°C et 50°C, préférentiellement opéré dans une gamme de températures se situant entre 10°C et 30 °C, afin d'obtenir des poudres présentant une répartition de tailles de particules, diamètres en volume, de d10>15μm, 50<d50<70μm, 120<d90<180pm.

2. Procédé selon la revendication 1 dans lequel le poly-arylène-éther-cétone est un poly éther-cétone- cétone.

3. Procédé selon la revendication 1 dans lequel on utilise un broyeur à impact.

4. Procédé selon la revendication 1 dans lequel on utilise un broyeur à jet d'air.

5. Procédé selon la revendication 1 dans lequel on utilise une combinaison de broyeurs à impact et à jet d'air.

6. Utilisation des poudres obtenues selon le procédé selon l'une des revendications 1 à 5 pour le revêtement d'articles.

7. Utilisation des poudres obtenues selon le procédé selon l'une des revendications 1 à 5 pour la fabrication de pièces par frittage laser.

8. Poudre obtenue selon le procédé d'une des revendications 1 à 5.

## Patentansprüche

1. Verfahren zum Zerkleinern von Polyarylenetherketonen in Form von Flocken oder grobem Pulver mit einer Porosität von mehr als 2 m$^2$/g, gemessen mit einem Coulter SA3100 der Firma Beckman Coulter, mit einer Messung durch Stickstoffadsorption bei 105 °C nach der BET-Methode und mit einem verdichteten Schüttvolumen von weniger als 0,4 kg/l, gemessen über ein STAV 2003-Stampfvolumeter, ausgestattet mit einem 250-ml-Röhrchen nach 2.500 Impulsen;
wobei dieses Verfahren bei einer Temperaturspanne zwischen 0 °C und 50 °C durchgeführt wird, vorzugsweise bei

einer Temperaturspanne zwischen 10 °C und 30 °C, um Pulver mit einer Partikelgrößenverteilung, d.h. einer Verteilung des Volumendurchmessers, von d10>15 µm, 50<d50<70 µm, 120<d90<180 µm zu gewinnen.

**2.** Verfahren nach Anspruch 1, wobei das Polyarylenetherketon ein Polyetherketonketon ist.

**3.** Verfahren nach Anspruch 1, wobei eine Prallmühle verwendet wird.

**4.** Verfahren nach Anspruch 1, wobei eine Luftstrahlmühle verwendet wird.

**5.** Verfahren nach Anspruch 1, wobei eine Kombination aus Prallmühle und Luftstrahlmühle verwendet wird.

**6.** Verwendung des gewonnenen Pulvers gemäß dem Verfahren nach einem der Ansprüche 1 bis 5 für die Beschichtung von Artikeln.

**7.** Verwendung des gewonnenen Pulvers gemäß dem Verfahren nach einem der Ansprüche 1 bis 5 für die Herstellung von Bauteilen durch Lasersintern.

**8.** Gemäß dem Verfahren nach einem der Ansprüche 1 bis 5 gewonnenes Pulver.

## Claims

**1.** A method for milling poly-arylene-ether-ketones in the form of scales or coarse powder, having a porosity greater than 2 $m^2/g$, measured with a Coulter SA3100 by the company Beckman Coulter, measurement by nitrogen adsorption at 105°C according to the BET method, and a compacted apparent density of less than 0.4 kg/l, measured on a STAV 2003 tamping volumeter equipped with a 250 ml specimen after 2500 pulses;
said method being carried out in a temperature range of between 0°C and 50°C, preferably carried out in a temperature range of between 10°C and 30°C, in order to obtain powders having a particle size distribution, diameters by volume, of d10>15 µm, 50<d50<70 µm, 120<d90<180 µm.

**2.** The method according to claim 1, wherein the poly-arylene-ether-ketone is a polyether-ketone-ketone.

**3.** The method according to claim 1, wherein an impact mill is used.

**4.** The method according to claim 1, wherein an air jet mill is used.

**5.** The method according to claim 1, wherein a combination of impact and air jet mills is used.

**6.** A use of the powders obtained according to the method according to one of claims 1 to 5 to coat items.

**7.** A use of the powders obtained according to the method according to one of claims 1 to 5 to manufacture parts by laser sintering.

**8.** A powder obtained according to the method of one of claims 1 to 5.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5247052 A
- US 20050207931 A
- US 20090280263 A